# EUROPÄISCHE PATENTANMELDUNG

(11) **EP 1 148 630 A1**
(43) Veröffentlichungstag der Anmeldung: **24.10.2001**
(21) Anmeldenummer: 00108673.5
(22) Anmeldetag: 20.04.2000
(51) Int. Cl.: H02P 1/18, B60P 1/44

(54) **Schaltanordnung zum Einschalten eines Gleichspannungsmotors**

(71) Anmelder: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(57) **Zusammenfassung**

Es wird eine Schaltanordnung (10) zum Einschalten eines Gleichspannungsmotors (11) vorgeschlagen, der wenigstens eine Feldwicklung (14), insbesondere zum Einschalten eines Gleichspannungsmotors (11) für den Antrieb einer Hydraulikmittelpumpe zum Betrieb von hydraulischen Hub-und Klappaktuatoren von Ladebordwandsystemen an Fahrzeugen. Dabei ist durch das Einschalten der Feldwicklung (14; 15) das Einschalten des Gleichspannungsmotors (11) bewirkbar.

## Beschreibung

### Beschreibung

Die Erfindung betrifft eine Schaltanordnung zum Einschalten eines Gleichspannungsmotors, der wenigstens eine Feldwicklung aufweist, insbesondere zum Einschalten eines Gleichspannungsmotors für den Antrieb einer Hydraulikmittelpumpe zum Betrieb von hydraulischen Hubund/oder Klappaktuatoren von Ladebordwandsystemen an Fahrzeugen.

Gleichspannungsmotoren werden in nahezu allen Bereichen der industriellen Technik eingesetzt, insbesondere in Bereichen, in denen ein Niederspannungs-Gleichspannungsnetz vorhanden ist, beispielsweise in Fahrzeugen, die unabhängig von einem Festnetz betrieben werden sollen. Derartige Fahrzeuge sind beispielsweise Schiffe, Flugzeuge und Landfahrzeuge, insbesondere Lastkraftfahrzeuge.

Es ist bekannt, daß Landfahrzeuge, insbesondere Last-kraftfahrzeuge, mit sogenannten Ladebordwandsystemen ausgerüstet werden können bzw. ausrüstbar sind, um beispielsweise eine Last von einem Fahrbahnuntergrund aus auf das Niveau einer Ladeebene eines Lastkraftfahrzeuges zu verbringen und umgekehrt. Bestimmte Ladebordwandsysteme sind nicht nur befähigt, eine Ladebordwand vom Niveau eines Fahrbahnuntergrundes auf das Niveau einer Ladefläche des Lastkraftfahrzeuges zu verbringen, vielmehr sind bestimmte Ausgestaltungen auch geeignet, im angehobenen Zustand die Ladeplattform von der Horizontalen in die Vertikale zu verschwenken, um einen Abschluß der Ladefläche eines Lastkraftfahrzeuges zu bilden, wenn das Lastkraftfahrzeug in Bewegung ist. Das Anheben und Absenken bzw. das Klappen von der Vertikalen in die Horizontale der Ladeplattform und umgekehrt wird regelmäßig mit sogenannten Hub- und, falls vorhanden, Klappakturatoren bewerkstelligt, die regelmäßig aus sogenannten Kolben-Zylinder-Einrichtungen ausgebildet sind, in denen ein unter Druck befindliches Hydraulikmittel die Bewegung des Kolbens bzw. der Kolben bewerkstelligt. Der Druck dieses Hydraulikmittels wird mittels einer oder mehrerer Hydraulikpumpen bewirkt, die durch Gleichspannungsmotoren angetrieben werden und aus dem lastkraftfahrzeugeigenen Bordspannungsnetz, beispielsweise aus einem 12-Volt- oder einem 24-Volt-Netz, mit Spannung versorgt werden. Um die bestimmungsgemäße Hubund Klappfunktion, insbesondere die Hubfunktion, unter maximaler Last durchführen zu können, müssen diese Gleichspannungsmotoren verhältnismäßig leistungsfähig sein, um die Hydraulikmittelpumpe zur Aufbringung des nötigen Hydraulikmitteldrucks antreiben zu können.

Typischerweise weisen diese Gleichspannungsmotoren eine Nennleistung im Bereich von 3 kW auf. Wird beispielsweise ein derartiger Gleichspannungsmotor an einem 12-Volt großen Bordnetz betrieben, fließt bei der vorangegebenen Nennlast ein Strom im Bereich von 250 Ampere. Aus diesem Grunde müssen Schalter, die derartige Ströme zu schalten imstande sind und forderungsgemäß eine lange Lebensdauer haben müssen, verhältnismäßig groß sein, was zur Folge hat, daß diese in eine elektromechanische und/oder elektronische Steuereinheit, mittels der die Steuerung und Überwachung der bestimmungsgemäßen Funktionen eines Ladebordwandsystems erfolgt, nicht integriert werden können. Man behilft sich bisher damit, ein Relais bzw. ein Schütz vorzusehen, das über eine Steuereinheit vorbeschriebener Art angesteuert werden kann, das über seine Leistungsschalter in der Lage ist, diese hohen Ströme zu schalten.

Bisher wurde das Schütz bzw. das Relais zum Einschalten des Gleichspannungsmotors in der Nähe oder unmittelbar am Gleichspannungsmotor befestigt und mußte schaltungstechnisch einerseits mit dem Gleichspannungsmotor und andererseits mit der Steuereinheit verbunden werden.

Im rauhen Betrieb derartiger Ladebordwandsysteme, die den Witterungs- und sonstigen Umgebungseinflüssen uneingeschränkt ausgesetzt sind, beispielsweise der Beeinflussung durch Regen, Schnee, Staub, Abgase und auch dem regelmäßig rauhen Umgang des Bedieners mit dem Ladebordwandsystem, hat sich insbesondere das Schütz bzw. Relais zum Ein- und Ausschalten des Gleich-spannungsmotors zum Betrieb der Hydraulikmittelpumpe als eine Schwachstelle herausgestellt, die immer wieder zu Fehlfunktionen und sogar Komplettausfällen neigt. Regelmäßig muß das Schütz bzw. das Relais hermetisch gegen diese Einflüsse gekapselt sein, um eine fortwährende Betriebssicherheit zu gewährleisten. Zudem ist das gesonderte Vorsehen eines Schützes bzw. eines Relais und die Befestigung am Gleichspannungsmotor oder die Anordnung in der Nähe einerseits mit erheblichen Kosten für das Schütz bzw. Relais und andererseits für die Befestigung und Verdrahtung mit dem Gleichspannungsmotor verbunden, was lediglich durch entsprechende manuelle Handlungen bei der Herstellung derartiger Ladebordwandsysteme möglich ist.

Es ist deshalb Aufgabe der vorliegenden Erfindung, eine Schaltanordnung zum Einschalten eines Gleichspannungsmotors der Eingangs genannten Art zu schaffen, mittels der das gesonderte Vorsehen eines Schützes bzw. eines Relais zum Einschalten des Gleichspannungsmotors nicht nötig ist und gesonderter Schaltungsaufwand zwischen dem Schütz bzw. Relais und dem Gleichspannungsmotor, wie er bisher nötig war, vollständig entfällt, wobei die Betriebssicherheit des Motors weitgehend, unabhängig von Witterungs- und Umwelteinflüssen fortlaufend gewährleistet sein soll, und wobei mit der Schaltungsanordnung ein Gleichspannungsmotor der hier beschriebenen Art äußerst kostengünstig realisiert können werden soll.

Gelöst wird die Aufgabe gemäß der Erfindung dadurch, daß durch das Einschalten der Feldwicklung das Einschalten des Gleichspannungsmotors bewirkt wird.

Der Vorteil der erfindungsgemäßen Lösung besteht im wesentlichen darin, daß das Schaltmittel selbst an seinem einen Pol über eine geeignet dimensionierte elektrische Leitung fest mit dem Bordnetz des Fahrzeuges verbunden werden kann. Wie angestrebt, ist ein Vorsehen eines Schützes bzw. eines Relais nicht erforderlich und somit ebenfalls keine Maßnahme, um das Schütz bzw. Relais am Gleichspannungsmotor oder in seiner Nähe zu installieren und es sind somit auch keine Schaltarbeiten zur Herstellung der elektrischen Verbindungen zwischen Schütz bzw. Relais, Gleichspannungsmotor, Bordnetz und Steuereinheit erforderlich.

Gleichspannungsmotoren können derart ausgestaltet sein, daß die Feldwicklung bzw. die Feldwicklungen in Reihe mit dem Anker des Gleichspannungsmotors geschaltet werden, wobei man in diesem Falle von einem Reihenschlußmotor spricht. Es ist aber auch möglich, die Feldwicklung bzw. die Feldwicklungen parallel zum Anker zu schalten, wobei man in diesem Fall von einem Nebenschlußmotor spricht. Sowohl Reihenschlußmotoren als auch Nebenschlußmotoren haben bestimmte Eigenschaften, die den jeweiligen Gleichspannungsmotortyp für bestimmte Antriebsaufgaben jeweils geeigneter erscheinen lassen. Es ist somit für bestimmte Anwendungsfälle vorteilhaft, die Feldwicklung durch wenigstens eine Reihenschlußwicklung auszubilden, die das Einschalten des Gleichspannungsmotors gemäß der erfindungsgemäß vorgeschlagenen Lösung bewirkt. Es kann aber auch vorteilhaft sein, die Feldwickung durch wenigstens eine Nebenschlußwicklung auszubilden, die in diesem Falle das Einschalten des Gleichspannungsmotors gemäß der erfindungsgemäß vorgeschlagenen Lösung bewirkt.

Im Stand der Technik sind neben den Reihenschlußmotoren und Nebenschlußmotoren auch sogenannte Doppelschlußmotoren (Kompoundmotoren) bekannt, die mit wenigstens einer Reihenschlußwicklung und wenigstens einer Nebenschlußwicklung ausgebildet sind, die für bestimmte Anwendungsfälle Vorteile gegenüber reinen Reihenschlußmotoren und reinen Nebenschlußmotoren aufweisen. Auch Doppelschlußmotoren können mit der erfindungsgemäßen Schaltanordnung vorteilhafterweise betätigt werden, und zwar dadurch, daß die Nebenschlußwicklung unabhängig von der Reihenschlußwicklung einschaltbar ist, wobei durch das Einschalten der Nebenschlußwicklung das Einschalten der Reihenschlußwicklung bewirkbar ist.

Der Vorteil dieser Ausgestaltung besteht im wesentlichen darin, daß die Nebenschlußwicklung, die parallel zum Anker des Gleichspannungsmotors geschaltet ist, einen geringeren Strom als die in Reihe mit dem Anker geschaltete Reihenschlußwicklung aufnimmt und weitgehend drehzahlunabhängig konstant ist. Das hat zur Folge, daß die Nebenschlußwicklung an sich direkt von der oben beschriebenen Steuereinheit für das Ladebordwandsystem ein- und ausgeschaltet werden kann, ohne daß es der Zwischenschaltung eines Schützes bzw. eines Relais bedarf. Wird nun die von der Steuereinheit direkt im Bedarfsfalle eingeschaltete Nebenschlußwicklung zum Einschalten des Gleichspannungsmotors eingeschaltet, so wird durch die Nebenschlußwicklung über geeignete Mittel nachfolgend eine Einschaltung der Reihenschlußwicklung bewirkt. Die Reihenschlußwicklung selbst wird somit dann, nachdem die Nebenschlußwicklung über die Steuereinheit mit Spannung versorgt worden ist, eingeschaltet, so daß nachfolgend der Gleichspannungsmotor seinen bestimmungsgemäßen Betrieb aufnehmen kann.

Es kann aber auch vorteilhaft sein, daß die Reihenschlußwicklung unabhängig von der Nebenschlußwicklung einschaltbar ist, wobei durch das Einschalten der Reihenschlußwicklung das Einschalten der Nebenschlußwicklung bewirkbar ist. Diese letztgenannte Variante der Schaltanordnung wird ebenfalls für bestimmte Anwendungsfälle, die ggf. auch konstruktiv aufgrund der Anordnung der Reihenschlußwicklung bzw. Nebenschlußwicklung im Gehäuse des Doppelschlußmotors bedingt sind, eingesetzt werden können.

Gemäß einer weiteren vorteilhaften Ausgestaltung der Schaltanordnung ist mittels des durch das Einschalten der Feldwicklung erzeugten magnetischen Feldes das Einschalten des Gleichspannungsmotors bewirkbar, und zwar derart, daß beispielsweise im Gleichspannungsmotor Schalt- und/oder Wirkmittel vorgesehen sein können, die im Gleichspannungsmotor nach Art eines Relais das Einschalten des Gleichspannungsmotors durch das magnetische Feld der Feldwicklung bewerkstelligen, wobei die Feldwicklung beispielsweise als Anker eines Schützes bzw. eines Relais wirken kann.

Bei einer anderen vorteilhaften Ausgestaltung ist das Einschalten der Feldwicklung durch ein Inkontaktbringen wenigstens einer Kohlebürste wenigstens eines Kohlebürstenpaares mit dem Kollektor des Ankers des Gleichspannungsmotors bewirkbar. Mittels des Einschaltens der Feldwicklung, die beim Einschalten ein Magnetfeld erzeugt und einen Mechanismus betätigt, über den wenigstens eine Kohlebürste an den Kollektor des Ankers angedrückt wird, kann der Stromkreis zum Anker geschlossen werden und somit kann dann auch der Gleichspannungsmotor seine bestimmungsgemäße Funktion ausführen.

Ist der Gleichspannungsmotor ein Doppelschlußmotor und wird die eine Feldwicklung durch die Nebenschlußwicklung gebildet und diese eingeschaltet, kann auf sonst gleiche Weise der Stromkreis zur Reihenschlußwicklung über den Anker geschlossen werden und somit kann dann auch der als Doppelschlußmotor ausgebildete Gleichspannungsmotor seine bestimmungsgemäße Funktion ausführen.

Bei einer noch anderen vorteilhaften Ausgestaltung der Schaltanordnung ist durch das Einschalten der Feldwicklung eine axiale Bewegung des Ankers bewirkbar, wobei durch die Verschiebung des Ankers ein Schaltmittel zum Einschalten des Gleichspannungsmotors beaufschlagbar ist. Die axiale Verschiebung des Ankers kann durch geeignete Anordnung der Feldwicklung relativ zum Anker in seiner bei der bestimmungsgemäßen Rotation des Ankers vorgegebenen Funktion bzw. Position festgelegt werden, wobei der Anker in Ruhestellung, d.h. wenn er nicht rotiert, beispielsweise federmittelbeaufschlagt, aus der axialen Arbeitsposition in die axiale Ruheposition überführt wird und somit auf entsprechende Steuerung der Feldwicklung von der Steuereinheit her den Gleichspannungsmotor abschaltet, nachdem die Feldwicklung abgeschaltet worden ist.

Vorteilhafterweise sind die durch das Einschalten der Feldwicklung zum Einschalten des Gleichspannungsmotors angesteuerten und beaufschlagten Wirk- und Schaltmittel im Gehäuse des Gleichspannungsmotors wenigstens teilweise aufgenommen, so daß der Gleichspannungsmotor entsprechend vorkonfektioniert als fertiges Bauelement die Schaltungsanordnung integral enthält. Nachträgliche Änderungen bzw. Modifikationen von Gleichspannungsmotoren, um sie mit der vorbeschriebenen, erfindungsgemäßen Schaltanordnung ausrüsten zu können, sind bei dieser vorteilhaften Ausführungsform nicht erforderlich, so daß sich außer einer Verbindung mit dem Bordgleichspannungsnetz und einer Einschalteinheit, beispielsweise der Steuereinheit im Zusammenhang mit dem Betrieb des Eingangs erwähnten Ladebordwandsystems, weiterer Schaltungsaufwand erübrigt.

Die Erfindung wird nun unter Bezugnahme auf die nachfolgenden schematischen Zeichnungen anhand eines Ausführungsbeispieles im einzelnen beschrieben. Darin zeigen:
- Fig. 1: eine Schaltanordnung in Verbindung mit einem als Doppelschlußmotor ausgebildeten Gleichspannungsmotor herkömmlicher Art,
- Fig. 2: eine Ausführungsform der Schaltanordnung gemäß der Erfindung, bei der unter der Wirkung des Einschaltens der Nebenschlußwicklung entweder ein gesondertes Wirk- und Schaltmittel oder eine Kohlebürste oder beide Kohlebürsten auf den Anker des Gleichspannungsmotors zu verschoben werden können, um die Reihenschlußwicklung einzuschalten,
- Fig. 3: eine Abwandlung der Ausführungsform gemäß Fig. 2, bei der das Einschalten der Reihenschlußwicklung durch das Einschalten der Nebenschlußwicklung ein dosiertes Verschieben des Ankers des Gleichspannungsmotors bewirkt wird, und
- Fig. 4: eine Schaltungsanordnung gemäß Fig. 3, bei der der Gleichspannungsmotor als Nebenschlußmotor ausgebildet ist.

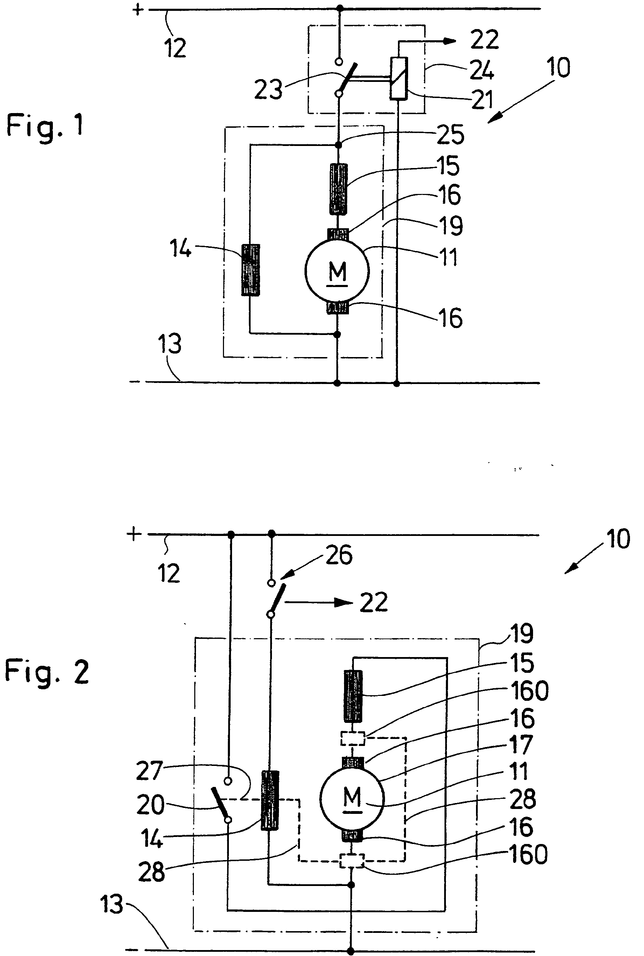

Es wird zunächst bezug genommen auf die Darstellung von Fig. 1, in der der grundsätzliche Aufbau der Schaltungsanordnung 10 dargestellt ist, wie er bisher im Zusammenhang mit Doppelschlußmotoren (Kompoundmotoren) 10 anzutreffen ist, und zwar auch im Zusammenhang mit Gleichspannungsmotoren 11, die zum Antrieb für Hydraulikmittelpumpen bei Ladebordwandsystemen, die an Fahrzeugen angebracht sind, dienen. Dabei ist die Spannungsversorgung 12, 13 beispielsweise ein elektrisches Bordnetz eines Fahrzeuges, wobei die Spannung regelmäßig 12-Volt oder 24-Volt beträgt. Andere Netzspannungen sind ebenfalls möglich. Ein Schütz bzw. ein Relais 21 ist steuerungsseitig mit einer Steuereinrichtung oder einer Schalteinrichtung 22 verbunden und wird von dort aktiviert bzw. deaktiviert, um den Gleichspannungsmotor 11 über den Schaltkontakt 23 einzuschalten. Die geschaltete Spannung, hier die positive Versorgungsspannung 12, wird auf den als Doppelschlußmotor bzw. Kompoundmotor gebildeten Gleichspannungsmotor 11 gegeben. Auf bekannte Weise weist ein Doppelschlußmotor 11 eine in Reihe mit dem Anker 18 geschaltete Reihenschlußwicklung 15 auf und eine parallel zu Anker 18 und Reihenschlußwicklung 15 geschaltete Nebenschlußwicklung 14. Die strichpunktierte Linie 19 soll das Gehäuse darstellen, das den Gleichspannungsmotor 11 auf an sich bekannte Weise standardmäßig umschließt.

Die bisherige Schaltanordnung 10 umfaßte das Schütz bzw. Relais 21 sowie den Schaltkontakt 23, was durch die strichpunktierte Linie 24 symbolisiert ist.

Die erfindungsgemäße Ausgestaltung der Schaltanordnung 10 ist in Figur 2 ersichtlich, wobei die Schaltanordnung 10 in das Gehäuse 19 des Gleichspannungsmotors 11 integriert ist. Gegenüber der Darstellung von Fig. 1 ist in Fig. 2 der Anschlußknoten 25, bei dem in Fig. 1 die Nebenschlußwicklung 14 mit der Reihenschlußwicklung 15 verbunden bzw. an einen Pol des Schaltkontaktes 23 angeschlossen sind, getrennt. Die Nebenschlußwicklung 14 ist aus dem Gehäuse 19 gesondert herausgeführt und auf einen Schalter 26 geführt, dessen anderer Pol mit der positiven Versorgungsspannung 12 verbunden ist. Der Schalter 26 wird durch eine Steuereinrichtung bzw. Schalteinrichtung 22 betätigt und kann als ganz normaler Schalter bzw. Relaisschalter, der beispielsweise Teil der Schalteinrichtung 22 ist, ausgebildet sein.

Die Reihenschlußwicklung 15, die in Fig. 1 ebenfalls zum Anschlußknoten 25 mit ihrem einen Pol führte, ist nunmehr auf ein Wirk- und/oder Schaltmittel 20 geführt, was in Fig. 2 symbolisch in Form eines Schalters dargestellt ist. Der andere Pol des Wirk- und Schaltmittels 20 ist mit der positiven Versorgungsspannung verbunden. Bei einer ersten Ausgestaltung der Schaltanordnung 10 gemäß der Erfindung wird nach Art eines Schützes bzw. Relais, siehe die gestrichelte Linie 27, von der Nebenschlußwicklung 14, nachdem diese durch die Steuereinrichtung bzw. Schalteinrichtung 22 über den Schalter 26 eingeschaltet ist, ein Magnetfeld erzeugt, das neben seiner bestimmungsgemäßen Wirkung zum Betrieb des Gleichspannungsmotors 11 ebenfalls das Wirk- und Schaltmittel 20 beaufschlagt. Ist dabei dann nach Einschalten der Nebenschlußwicklung 14 das Wirk- und Schaltmittel 20 aktiv, d.h. im vorliegenden Fall geschlossen, so liegt die positive Versorgungsspannung 12 auch an der Reihenschlußwicklung 15 an, so daß sich der Gleichspannungsmotor 11 bestimmungsgemäß in Betrieb setzt. Der Stromfluß durch die Reihenschlußwicklung 15 ist sehr viel größer als der im wesentlichen nach dem Einschalten konstante Stromfluß durch die Nebenschlußwicklung 14. Ein Schütz bzw. Relais 21 zum Einschalten des Gleichspannungsmotors gemäß Schaltanordnung 10 von Fig. 1 ist erfindungsgemäß nicht erforderlich.

Eine zweite Variante der Schaltanordnung 10 in Verbindung mit dem Gleichspannungsmotor 11 ist ebenfalls aus Fig. 2 ersichtlich, und zwar gemäß der gestrichelten Linie 28. Auch in diesem Falle wird durch geeignete Mittel im Ruhezustand des Gleichspannungsmotors 11 eine Verschiebung wenigstens einer Kohlebürste 16 aus ihrer vom Kollektor 17 zunächst abgehobenen Stellung, der hier symbolisch durch den Kreis des Gleichspannungsmotors 11 dargestellt ist, bewirkt, und zwar durch geeignete Führung der Kohlebürste 16 bzw. beider Kohlebürsten 16, 160, was ebenfalls möglich ist. Aufgrund der Erzeugung eines magnetischen Feldes nach dem Einschalten der Nebenschlußwicklung 14 wird eine Verschiebung der Kohlebürste 16, ggf. beider Kohlebürsten 16, 160, auf den Kollektor 17 bewirkt, so daß dann, wenn die Kohlebürste 16 bzw. die Kohlebürsten 160 in leitendem Eingriff mit dem Kollektor 17 stehen, auch die Reihenschlußwicklung 17 mit Spannung versorgt wird und der Gleichspannungsmotor 11 sich bestimmungsgemäß in Betrieb setzt.

Wird durch die Steuereinrichtung bzw. die Schalteinrichtung 22 gesteuert der Schalter geöffnet, bricht das Magnetfeld der Nebenschlußwicklung 14 zusammen und zwar mit der Folge, daß die Kohlebürste 16 bzw. die Kohlebürsten 160 wieder in ihre gestrichelt dargestellte Außereingriffstellung mit dem Kollektor 17 kommen, so daß der Gleichspannungsmotor 11 anhält.

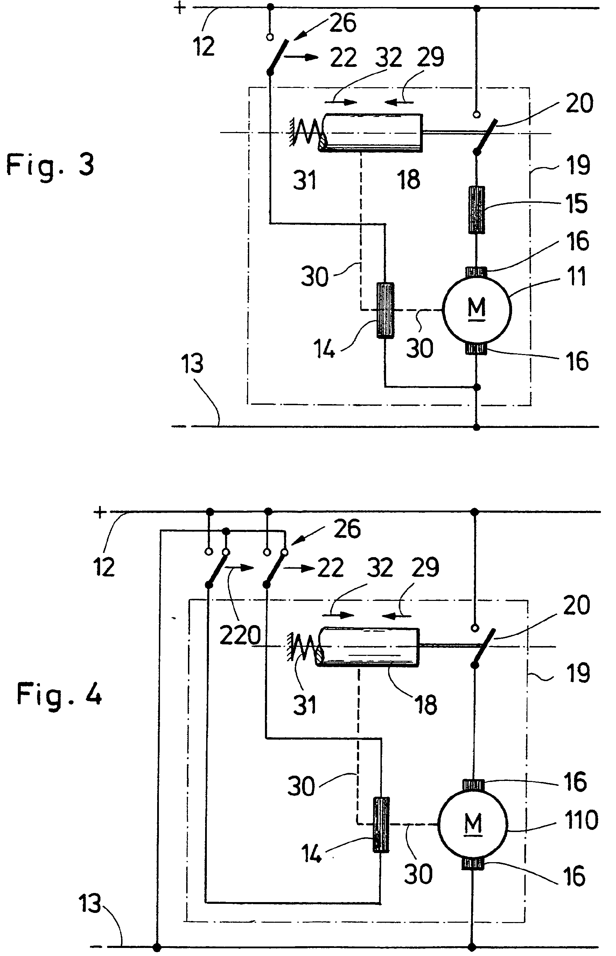

In Fig. 3 ist eine weitere Modifikation der Schaltanordnung 10 dargestellt, die hier ebenfalls vollständig in den Gleichspannungsmotor 11 bzw. das Gehäuse 19, das den Gleichspannungsmotor 11 umgibt, integriert ist. Das Einschalten der Reihenschlußwicklung 15 wird hier dadurch bewirkt, daß dann, wenn der Schalter 26 eingeschaltet wird, wiederum in der Nebenschlußwicklung 14 ein magnetisches Feld erzeugt wird, das eine geringe Verschiebung des Ankers 18 in Richtung des Pfeiles 29 bewirkt, wobei der Anker 18 mit dem Wirk- und Schaltmittel 20 geeignet gekoppelt ist, so daß der Schalter 20 einschaltet und die Reihenschlußwicklung 15 an die positive Versorgungsspannung angeschlossen wird. Der Gleichspannungsmotor 11 kann somit dann seinen bestimmungsgemäßen Betrieb aufnehmen. Die gestrichelte Linie 30 symbolisiert die Wirkverbindung zwischen der Nebenschlußwicklung 14 und dem Anker 18. Wird der Schalter 26 durch entsprechende Steuerung von der Steuereinrichtung bzw. Schalteinrichtung 22 wiederum geöffnet, wird durch eine Feder 31 beaufschlagt der Anker 18 wiederum in seine spannungslose Ruhestellung überführt, mit der Folge, daß das Wirk- und Schaltmittel 20 geöffnet wird und somit auch die Reihenschlußwicklung 15 von der positiven Versorgungsspannung 12 abgeschaltet wird.

Fig. 4 zeigt eine Schaltanordnung 10, die im wesentlichen einen Aufbau wie den gemäß Fig. 3 zeigt. Der Gleichspannungsmotor ist als Nebenschlußmotor 110 ausgebildet, weist also keine Reihenschlußwicklung 15 auf. Ansonsten ist die Funktion die gleiche wie vorangehend im Zusammenhang mit Fig. 3 beschrieben. Diese Ausgestaltung gestattet eine einfache Drehrichtungsänderung des Gleichspannungsmotors. Durch Aktivierung der Steuereinrichtung 22 dreht der Gleichspannungsmotor in die eine Richtung, durch Aktivierung der Steuereinrichtung 220 dreht der Gleichspannungsmotor in die andere Richtung. Die übrigen im Zusammenhang mit Fig. 3 beschriebenen Funktionen bleiben davon unberührt.

### Bezugszeichenliste

- 10: Schaltanordnung
- 11: Doppelschlußmotor (Kompoundmotor)
- 110: Nebenschlußmotor
- 12: Spannungsversorgung (+ Pol)
- 13: Spannungsversorgung (- Pol)
- 14: Nebenschlußwicklung
- 15: Reihenschlußwicklung
- 16: Kohlebürste
- 160: Kohlebürsten
- 17: Kollektor
- 18: Anker (Doppelschlußmotor)
- 19: Gehäuse
- 20: Wirk- und Schaltmittel
- 21: Schütz/Relais
- 22: Steuereinrichtung (Schalteinrichtung)
- 220: Steuereinrichtung (Schalteinrichtung)
- 23: Schaltkontakt
- 24: bisherige Schaltanordnung
- 25: Anschlußknoten
- 26: Schalter
- 27: gestrichelte Linie
- 28: gestrichelte Linie
- 29: Pfeil
- 30: gestrichelte Linie
- 31: Feder
- 32: Pfeil

## Patentansprüche

1. Schaltanordnung zum Einschalten eines Gleichspannungsmotors, der wenigstens eine Feldwicklung aufweist, insbesondere zum Einschalten eines Gleichspannungsmotors für den Antrieb einer Hydraulikmittelpumpe zum Betrieb von hydraulischen Hub- und Klappaktuatoren von Ladebordwandsystemen an Fahrzeugen, **dadurch gekennzeichnet, daß** durch das Einschalten der Feldwicklung (14; 15) das Einschalten des Gleichspannungsmotors (11) bewirkt wird.

2. Schaltanordnung nach Anspruch 1, **dadurch gekennzeichnet, daß** die Feldwicklung wenigstens eine Reihenschlußwicklung (15) ist.

3. Schaltanordnung nach Anspruch 1, **dadurch gekennzeichnet, daß** die Feldwicklung wenigstens eine Nebenschlußwicklung (14) ist.

4. Schaltanordnung nach einem oder mehreren der Ansprüche 1 bis 3, **dadurch gekennzeichnet, daß** der Gleichspannungsmotor (11) als Doppelschlußmotor (Kompoundmotor) mit wenigstens einer Reihenschlußwicklung (15) und wenigstens einer Nebenschlußwicklung (14) ausgebildet ist.

5. Schaltanordnung nach Anspruch 4, **dadurch gekennzeichnet, daß** die Nebenschlußwicklung (14) unabhängig von der Reihenschlußwicklung (15) einschaltbar ist, wobei durch das Einschalten der Nebenschlußwicklung (14) das Einschalten der Reihenschlußwicklung (15) bewirkbar ist.

6. Schaltanordnung nach Anspruch 4, **dadurch gekennzeichnet, daß** die Reihenschlußwicklung (15) unabhängig von der Nebenschlußwicklung (14) einschaltbar ist, wobei durch das Einschalten der Reihenschlußwicklung (15) das Einschalten der Nebenschlußwicklung (14) bewirkbar ist.

7. Schaltanordnung nach einem oder mehreren der Ansprüche 1 bis 6, **dadurch gekennzeichnet, daß** mittels des durch das Einschalten der Feldwicklung (14; 15) erzeugten magnetischen Feldes das Einschalten des Gleichspannungsmotors (11) bewirkbar ist.

8. Schaltanordnung nach einem oder mehreren der Ansprüche 1 bis 7, **dadurch gekennzeichnet, daß** durch das Einschalten der Feldwicklung (14; 15) ein Inkontaktbringen wenigstens einer Kohlebürste (16) wenigstens eines Kohlebürstenpaares mit dem Kollektor (17) des Ankers (18) des Gleichspannungsmotors (11) bewirkbar ist.

9. Schaltanordnung nach einem oder mehreren der Ansprüche 1 bis 8, **dadurch gekennzeichnet, daß** durch das Einschalten der Feldwicklung (14; 15) eine axiale Bewegung des Ankers (18) bewirkbar ist, wobei durch die Verschiebung des Ankers (18) ein Schaltmittel (20) zum Einschalten des Gleichspannungsmotors (11) beaufschlagbar ist.

10. Schaltanordnung nach einem oder mehreren der Ansprüche 1 bis 9, **dadurch gekennzeichnet, daß** die durch das Einschalten der Feldwicklung (14) zum Einschalten des Gleichspannungsmotors (11) angesteuerten oder beaufschlagten Wirk- und Schaltmittel im Gehäuse (19) des Gleichspannungsmotors (11) aufgenommen sind. mv/sd
